# EUROPÄISCHE PATENTSCHRIFT

(11) **EP 2 442 987 B1**
(45) Veröffentlichungstag und Bekanntmachung des Hinweises auf die Patenterteilung: **10.08.2016**
(21) Anmeldenummer: 10726476.4
(22) Anmeldetag: 15.06.2010
(51) Int. Cl.: B42D 15/00, D21H 19/24, D21H 17/57, D21H 27/36, B32B 23/08, B32B 27/10

(54) **FOLIENVERBUNDBANKNOTE**
COMPOSITE FILM FOR BANKNOTES
FEUILLE COMPOSITE POUR BILLETS DE BANQUE

(30) Priorität: 16.06.2009 DE 102009024987
(43) Veröffentlichungstag der Anmeldung: 25.04.2012
(73) Patentinhaber: Giesecke & Devrient GmbH, 81677 München (DE)
(72) Erfinder: SEIDLER, Rudolf, 83703 Gmund (DE); WINKLER, Karin, 83703 Gmund-Dürnbach (DE); LIEBLER, Ralf, 83727 Schliersee (DE); WIEDNER, Bernhard, 83714 Miesbach (DE)
(86) Internationale Anmeldenummer: PCT/EP2010/058415
(87) Internationale Veröffentlichungsnummer: WO 2010/146065

(56) Entgegenhaltungen:
- EP-A1- 1 783 273
- EP-A2- 1 122 089
- EP-A2- 1 854 641
- WO-A1-96/28610
- WO-A2-2004/028825
- DE-A1- 19 829 004

## Beschreibung

Die Erfindung betrifft eine Folienverbundbanknote mit einem mindestens einlagigen Basispapier und zwei Kunststofffolien, die dieselben Flächenabmessungen wie das Basispapier besitzen und das Basispapier an seinen beiden Hauptflächen jeweils vollflächig bedecken. Die Erfindung betrifft außerdem ein Verfahren zur Herstellung einer derartigen Folienverbundbanknote.

Die Vorteile der vorliegenden Erfindung kommen in besonderem Maß bei Banknoten zum Tragen, da diese im Umlauf einer starken Beanspruchung ausgesetzt sind. Die vorliegende Erfindung ist jedoch generell auf alle Sicherheitspapiere zur Herstellung stark beanspruchter Wertdokumente anwendbar, beispielsweise für Sicherheitspapiere zur Herstellung von Urkunden, Aktien, Scheckformularen, Ausweisdokumenten, etc.

Banknoten werden üblicherweise aus sogenannten Sicherheitspapieren gefertigt, die aus Baumwollfasern bestehen und besondere Sicherheitsmerkmale, wie einen teilweise in das Papier eingebrachten Sicherheitsfaden und ein Wasserzeichen, aufweisen. Die Umlaufdauer einer Banknote hängt wesentlich von ihrer Beanspruchung ab. Bestimmte Stückelungen werden im Handel bevorzugt benutzt und weisen damit aufgrund der stärkeren Belastung durch Umwelteinflüsse eine geringere Umlaufzeit auf. Als Hauptursache für die eingeschränkte Umlaufzeit der Banknoten gilt ihre frühzeitige Verschmutzung. Da Banknotenpapier sehr porös ist, besitzt es eine große Oberfläche sowie eine hohe Oberflächenrauigkeit. Auch wenn die hieraus resultierenden Vorsprünge und Hohlräume in Größenordnungen liegen, die vom menschlichen Auge nicht mehr aufgelöst werden können, so ermöglichen sie doch im Vergleich zu einer glatten Oberfläche Schmutzablagerungen in erheblichem Maße.

Ein besonders gravierendes Problem stellt die Empfindlichkeit von Banknotenpapier, und ganz allgemein von Papier, für ölige und wässrige Verunreinigungen dar. Aufgrund der fehlenden ölabweisenden und wasserabweisenden Eigenschaften von unbehandeltem Papier dringen Öl und Wasser rasch in das Material ein. Wasser weicht das Papier auf und verringert dadurch seine mechanische Stabilität, was zu Oberflächenabrieb oder zu einem Reißen der nassen Stellen führen kann. Mit anderen Worten, erhöht sich z. B. in einem feuchten Klima der sogenannte "Doppelfalz" erheblich. Verschmutzungen durch Fette und Öle haben den zusätzlichen Nachteil, dass sie im Papier hässliche "Fettflecke" bilden, die praktisch nicht entfernbar sind. Die Affinität der lipophilen Stoffe zum Papier wird durch die Ausstattung des Papiers mit Masseleimen noch erhöht.

Man ist daher bestrebt, Sicherheitspapier, und insbesondere das stark beanspruchte Banknotenpapier, gegen Verschmutzungen jeglicher Art zu schützen, um dadurch die Umlaufdauer zu erhöhen.

In der WO 98/15418 wurde daher vorgeschlagen, Banknoten vollständig aus einem Kunststoffsubstrat zu fertigen. Allerdings muss in diesem Fall auf die üblichen und bewährten Sicherheitselemente, wie Portrait-Wasserzeichen und Fenstersicherheitsfaden, verzichtet werden, ebenso wie auf die besonderen Eigenschaften, wie Klang und Griffigkeit des Banknotenpapiers. Die im Banknotenbereich übliche Bedruckung im Tiefdruck, insbesondere Stichtiefdruck, die aufgrund des durch den Farbauftrag entstehenden Reliefs als zusätzliches taktiles Echtheitskennzeichen dient, wird auf Kunststoffsubstraten nur zu einem flachen Relief. Zudem sind reine Kunststoffbanknoten stark hitzeempfindlich, und in Ländern mit klimatisch ungünstigen Bedingungen neigen die Kunststoffsubstrate zur Schrumpfung. Im Hinblick auf die Fälschungssicherheit weisen Kunststoffbanknoten zusätzlich den entscheidenden Nachteil auf, dass das Substrat für jedermann erhältlich ist.

Aus EP 1 099 024 B1 ist ein Sicherheitspapier bekannt, das auf mindestens einer Oberfläche mit einer Beschichtung versehen ist, die aus einer Zusammensetzung besteht, die ein Acrylatsystem als ausschließliches Bindemittel und keine Füllstoffe enthält. Die Beschichtung macht das Sicherheitspapier schmutzabweisend und erhöht dadurch die Gebrauchslebensdauer des Sicherheitspapiers, und damit die Umlaufdauer einer Banknote, wobei die Beschichtung die typischen Eigenschaften des Sicherheitspapiers, wie "Griff", Bedruckbarkeit, Klang und Farbe, nicht oder jedenfalls nicht merklich verändert.

Die genannten Beschichtungen sind allerdings nur begrenzt wirksam. Außerdem kommt es bei der Benutzung von Sicherheitspapieren oder Banknoten häufig zu unbeabsichtigten Zerstörungen der schützenden Beschichtung, beispielsweise durch Knicken. An den Knickstellen können sich Verunreinigungen anlagern und in das nun "offene" Material eindringen.

In EP 1 545 902 B1 wird ein Sicherheitspapier offenbart, das die Vorteile von Papier und Kunststoffen zu verbinden versucht. Das Sicherheitspapier besteht aus einem knitterbaren, mehrschichtigen Substrat, umfassend mindestens eine Papierschicht, die beidseitig vollflächig mit Folie beschichtet ist, wobei zumindest die Folie mit wenigstens einem Sicherheitsmerkmal ausgestattet ist. Das Sicherheitspapier sowie die daraus hergestellten Wertdokumente vereinigen durch die Kombination von Papier und Folie die positiven Eigenschaften der beiden Substrattypen. Schrumpfungen der Folie sind durch die Papierschicht weitgehend ausgeschlossen, während das Papier durch die Folie einen zusätzlichen Halt erfährt. So werden die mechanische Festigkeit und Dimensionsstabilität gewährleistet, und die Einreißfestigkeit wird deutlich verbessert. Werden Papier und Folie mittels Klebstoff verbunden, und Papier, Folie und Klebstoff genau aneinander angepasst, wird in der Regel auch die Spaltbarkeit der einzelnen Schichten reduziert werden. Die Folie verhindert einerseits eine überstarke Verschmutzung der Papieroberfläche, so dass die Umlaufdauer erhöht wird, und andererseits führt die Folienbeschichtung zu einer erhöhten Fälschungssicherheit, da die Sicherheitsmerkmale im Papier und zum Teil auch die Sicherheitsmerkmale in der Folie von außen nicht mehr zugänglich sind und gegebenenfalls auch in komplexer Beziehung zueinander angeordnet werden können. Trotz Folienbeschichtung bleiben aber die üblicherweise bei Sicherheitspapier gewünschten Eigenschaften wie Griffigkeit und Klang weitgehend unverändert.

Die in EP 1545 902 B1 offenbarten Wertdokumente stellen einen deutlichen Fortschritt in Richtung auf die Verbesserung der Umlaufdauer von Wertdokumenten, beispielsweise Banknoten, dar. Sie weisen jedoch nach wie vor unerwünschte Nachteile auf. Bedingt durch das Herstellungsverfahren im Bogenformat mit Bögen mit einer Vielzahl von Wertdokumenten, von denen die Einzel-Wertdokumente abgetrennt werden, weisen die Wertdokumente an ihrem gesamten Umfang ungeschützte Stirnseiten auf, an denen der Schichtaufbau der Wertdokumente quasi im Querschnitt offen zutage tritt. An diesen offenen Kanten kann Flüssigschmutz, wässrig und/ oder ölig, in den Verbund eindringen. Bei starker Beanspruchung, wie sie bei Banknoten üblich ist, und der damit einhergehenden starken Verschmutzung kann das Eindringen von Flüssigschmutz zu sichtbaren Rändern an den Banknotenkanten, den sogenannten "Trauerrändern", und gegebenenfalls zu dendritischen Fortsätzen der Trauerränder ins Banknoteninnere führen. Außerdem führt das Eindringen von Schmutz zu einer Schwächung des Schichtverbunds, und es kann zu einem stellenweisen Ablösen und Trennen des Verbunds Folie/Papier kommen.

Zudem kann es bei starker Beanspruchung auch zu Rissen in den Folien kommen, und Flüssigschmutz kann dann nicht nur an den Kanten, sondern auch an den Hauptflächen in den Verbund und das Papier hineinpenetrierieren. In diesem Fall ist an der betroffenen Hauptfläche dasselbe Phänomen zu beobachten wie an den Ecken und Kanten, d. h. entlang des Risses bilden sich Trauerränder, gegebenenfalls mit Fortsätzen, die sich weit über die Oberfläche des Wertdokuments erstrecken können.

Dokument WO 2004/028825 A2 (= D1) beschreibt ein Sicherheitspapier zur Herstellung von Wertdokumenten, umfassend eine Papierschicht, die auf beiden Seiten mit Folie beschichtet ist.

Dokument EP 1854641 A2 (= D2) beschreibt eine Folienverbundbanknote, umfassend zwei polymere Deckschichten und mindestens eine zwischen den Deckschichten liegende Zwischenschicht aus Papier, wobei die Deckschichten Ecken und Kanten der Banknote definieren und sich die Zwischenschicht im Bereich der Kanten zumindest teilweise bis zu den Kanten erstreckt. Die Deckschichten sind zumindest an den Ecken direkt miteinander verbunden. Auf diese Weise kann das Aufspalten der Folienverbundbanknote verhindert werden.

Dokument WO 96/28610 A1 (= D3) beschreibt ein Sicherheitspapier, das einseitig oder beidseitig nach dem Schritt des Leimens mit einer ein unpigmentiertes Polyurethan umfassenden Beschichtung versehen wird. Das Sicherheitspapier weist u.a. eine verbesserte Königs-Härte, eine höhere Wasserbeständigkeit und ein verbessertes Verhalten der aufgedruckten Druckfarbe gegenüber Auslaufen auf.

Dokument DE 19829004 A1 (= D4) beschreibt ein mit einer Beschichtung versehenes Sicherheitspapier, wobei die Beschichtung aus einer Zusammensetzung besteht, die lediglich ein Bindemittel und keine Füllstoffe enthält.

Dokument EP 1783273 A1 (= D5) beschreibt ein Sicherheitspapier, das mit einer Imprägnierungszusammensetzung behandelt ist. Die Zusammensetzung weist mindestens eine Verbindung auf, die ausgewählt ist von Fluorcarbon-Harzen, oberflächenaktiven, fluoraliphatischen polymeren Estern und fluorhaltigen Copolymeren auf Acrylatbasis.

Aufgabe der vorliegenden Erfindung ist es daher, ein Sicherheitspapier und insbesondere eine Banknote mit einem beidseitig vollflächig mit Folie beschichteten Basispapier (Folienverbundbanknote) dergestalt zu verbessern, dass die Nachteile des Stands der Technik vermieden oder zumindest verringert werden.

Die Folienverbundbanknote soll schmutzabweisend sein, eine gute mechanische Festigkeit haben, eine hohe Umlaufdauer besitzen und eine gute Fälschungssicherheit aufweisen.

Insbesondere besteht die Aufgabe der vorliegenden Erfindung darin, eine Folienverbundbanknote bereit zu stellen, die eine gute Beständigkeit gegen das Eindringen von Schmutz in den Schichtverbund an den Banknotenkanten und gegebenenfalls an Beschädigungen der Folie aufweist. Aufspaltungen des Schichtverbunds, bedingt durch das Eindringen von Schmutz, sollen vermieden werden.

Die Aufgabe wird gelöst durch die Folienverbundbanknote und das Verfahren zur Herstellung einer Folienverbundbanknote mit den Merkmalen, wie sie in den unabhängigen Ansprüchen angegeben sind. Weiterbildungen der Erfindung sind in den jeweiligen abhängigen Ansprüchen angegeben.

Die erfindungsgemäße Folienverbundbanknote weist ein mindestens einlagiges Basispapier und zwei Kunststofffolien auf, die einen Schichtverbund bilden, wobei sich das Basispapier im Inneren des Schichtverbunds befindet. Die beiden Kunststofffolien haben dieselben Flächenabmessungen wie das Basispapier und bedecken das Basispapier an seinen beiden Oberflächen daher jeweils vollflächig. Vor der Verbindung des Basispapiers mit den Kunststofffolien wird das Basispapier erfindungsgemäß an seinen beiden Hauptflächen, d. h. den "Oberflächen", jeweils vollflächig mit einer Imprägnierungszusammensetzung imprägniert, die mindest ein Polyurethan enthält. Die dadurch gebildete Polyurethan-Imprägnierung ist bevorzugt eine Rein-Polyurethan-Imprägnierung, d. h. die Imprägnierungszusammensetzung enthält nur Polymere und/ oder Prepolymere mit Urethan-Einheiten, aber keine Urethan-freien Polymere und/ oder Prepolymere. Es sei an dieser Stelle zur Klarstellung ausdrücklich angemerkt, dass der in der vorliegenden Anmeldung verwendete Begriff "Polyurethan-Imprägnierung" neben den vorstehend erwähnten Rein-Polyurethan-Imprägnierungen auch sämtliche weiter unten erwähnten Imprägnierungs-Zusammensetzungen umfasst. Demzufolge umfasst der Begriff "Polyurethan-Imprägnierung" z. B. auch Polyurethan-Acrylat-Copolymere, wie weiter unten näher erläutert.

Der Schichtverbund, der das Basispapier und die beiden Kunststofffolien aufweist, wird im folgenden als "Substrat" bezeichnet.

Das Substrat besteht im einfachsten Fall aus drei Schichten, nämlich einer Papierschicht im Inneren des Schichtverbunds und den beiden Folien, die die Papierschicht bedecken. Die Papierschicht kann einlagig ausgebildet sein oder aus zwei oder mehr Lagen bestehen. Eine mehrlagige Ausbildung des Basispapiers kann insofern vorteilhaft sein, als auf diese Weise ein Basispapier mit bereichsweise unterschiedlichen Eigenschaften auf einfache Weise erhalten werden kann. Beispielsweise kann eine der Lagen eine Aussparung aufweisen, die ein zwischen den Papierlagen eingebettetes Sicherheitselement sichtbar werden lässt, oder es kann eine der Lagen in ihrem Volumen mit Lumineszenzpigmenten einer bestimmten Farbe ausgestattet werden, während die entgegengesetzte Papierlage in ihrem Volumen mit Lumineszenzpigmenten einer anderen Farbe ausgestattet wird, so dass das Basispapier bei Betrachtung von unterschiedlichen Seiten her in verschiedenen Farben luminesziert. Es besteht auch die Möglichkeit, das Basispapier insgesamt vollflächig oder als einzelne Teilflächen zu verarbeiten. So können die Folien beispielsweise eine unterbrochene Papierschicht oder mehrere separate Papierteilflächen abdecken.

Hinsichtlich der Art der Papierschicht gibt es keine speziellen Beschränkungen. Banknotenpapiere werden typischerweise aus Fasern von Einjahrespflanzen, insbesondere Baumwollfasern oder Zellstofffasern, hergestellt, aber es können auch Papiere verwendet werden, die zumindest teilweise aus Kunststofffasern bestehen, vorzugsweise aus Polyamidfasern oder Polyesterfasern. Bevorzugt wird ein Baumwollpapier als Basispapier verwendet. Weiter wird bevorzugt, dass als Basispapier ein Baumwollpapier mit einem Anteil von 1 bis 15 Gew.-% Kunststofffasern, insbesondere Polyamidfasern oder Polyesterfasern, verwendet wird, wobei ein Anteil von 3 bis 8 Gew.-% noch weiter bevorzugt ist und ein Anteil von 5 bis 6 Gew.-% insbesondere bevorzugt ist. Mit "Gew.-%" ist hierbei der Anteil der Kunststofffasern in Gewichtsprozent bezogen auf den gesamten Faseranteil des Basispapiers zu verstehen. Mit Vorteil handelt es sich bei den Kunststofffasern um Polyamidfasern mit einer Faserfeinheit bzw. einem Titer von 0,5 bis 2,5 dtex (Dezitex) und einer Länge von 2 bis 6 mm. Weiter bevorzugt sind Polyamidfasern mit einer Faserfeinheit von 0,8 bis 1,2 dtex und einer Länge von 3 bis 5 mm. Die Einheit "tex" ist definiert als Masse der Faser in Gramm pro Länge der Faser in Kilometer. Die Querschnittsform der Kunststofffasern ist vorzugsweise rund, wobei jede andere Form ebenfalls zu vorteilhaften Ergebnissen führt. Die Beimischung von Kunststofffasern im Basispapier führt zu einer verminderten Spaltbarkeit des Triplex-Verbundes. Weiterhin verbessern die Kunststofffasern die Weiterreißfestigkeit des Substrates in Abhängigkeit vom Anteil. Das Flächengewicht des Basispapiers variiert je nach Anwendungsform. Übliche Flächengewichte liegen im Bereich von 50 g/m² bis 100 g/m², vorzugsweise im Bereich von 60 g/m² bis 90 g/m², besonders bevorzugt bei etwa 70 g/m². Bei mehrlagigen Basispapieren können die einzelnen Papierlagen aus gleichen oder aus unterschiedlichen Papiersorten bestehen. Beispielsweise kann eine Papierlage ein reines Baumwollpapier sein, während eine weitere Papierlage Kunststofffasern aufweist.

Auch hinsichtlich der Art der Herstellung des Basispapiers gibt es keine speziellen Einschränkungen. Eine bevorzugte Herstellungsweise ist auf einer Rundsiebmaschine.

Das Basispapier wird an seinen beiden Oberflächen jeweils mit einer Folie verbunden. Der entstehende Schichtverbund, das mindestens dreischichtige Substrat, ist ein knitterbares Material, d. h. es weist im Wesentlichen die Knick- und Falteigenschaften eines Papierblatts auf. Das Substrat sollte sich also nicht wie eine Karte verhalten, die starr und nur geringfügig biegsam ist. Vielmehr soll das Substrat in seiner Gesamtheit soweit wie möglich die Griffigkeit und den Klang des Basispapiers aufweisen.

Die Folien an den beiden Oberflächen des Basispapiers sind Kunststofffolien, wobei die Folien gleich oder verschieden sein können. Bevorzugt sind Folien aus Polyethylenterephthalat (PET) und Folien aus orientiertem Polypropylen (OPP). Es sind jedoch auch beliebige andere Kunststofffolien verwendbar. Als Material für die Kunststofffolien kommen demzufolge z. B. auch Polyamid und cyclo-olefinische Kohlenwasserstoffe infrage. Je nach Anwendung können die Folien mattiert oder glänzend ausgeführt sein. Eine Variante des Matt-/Glanz-Effekts auf einer Folie kann beispielsweise dadurch erzeugt werden, dass eine glänzende Folie in bestimmten Bereichen mit einem Resistlack beschichtet wird, dann eine Ätzung der Folienoberfläche erfolgt, und anschließend der Resistlack entfernt wird. Im Bereich des ursprünglich aufgebrachten Resistlacks ist die Folie weiterhin glänzend, während in den Bereichen ohne Resistlack die Oberfläche angeätzt und daher matt erscheint. In aller Regel ist es erwünscht, dass die Folien die Sicht auf das Basispapier nicht beeinträchtigen, weshalb transparente Folien bevorzugt sind.

Bevorzugte Foliendicken liegen im Bereich von 1 µm bis 20 µm, besonders bevorzugt im Bereich von 6 µm bis 15 µm. Im Allgemeinen können die typischen Eigenschaften des Basispapiers, wie Knitterfähigkeit und Faltbarkeit, umso besser zur Geltung kommen, je dünner die Folien sind. Typischerweise werden an beiden Oberflächen des Basispapiers Folien gleicher Dicke verwendet, dies ist aber nicht zwingend.

Die Folien dienen unter anderem der Verbesserung der mechanischen Festigkeit der Folienverbundbanknote. Um diese weiter zu steigern, insbesondere auch um die Einreißfestigkeit zu verbessern, können die verwendeten Folien unterschiedliche Reckung aufweisen. Die Folien unterschiedlicher Reckung können sich auf derselben Oberfläche des Basispapiers befinden, d. h. die Folienverbundbanknote kann ein Basispapier aufweisen, das an einer oder an beiden Hauptflächen nicht nur eine Kunststofffolie, sondern zwei oder mehr Kunststofffolien aufweist. In der Regel ist das Basispapier jedoch an jeder der beiden Hauptflächen nur von einer Kunststofffolie bedeckt. Im Falle von Folien mit unterschiedlicher Reckung bedeutet dies, dass die Folien an unterschiedlichen Oberflächen des Basispapiers angebracht sind. Die an verschiedenen Oberflächen des Basispapiers angebrachten Folien erhöhen deutlich den Einreißwiderstand, wenn sie unterschiedliche Reckung aufweisen. Es versteht sich, dass die Folien der Folienverbundbanknote mit weiteren Schichten, insbesondere einer ein- oder mehrschichtigen Farbannahmeschicht ausgerüstet sein können. Eine Farbannahmeschicht verbessert z.B. die Haftung der auf den Folien aufzubringenden Druckschichten ganz erheblich.

Neben der Fähigkeit, die mechanische Stabilität und Schmutzabweisung einer Folienverbundbanknote oder eines sonstigen Sicherheitspapiers oder Wertdokuments zu erhöhen, können die Folien bei entsprechender Ausrüstung mit Sicherheitsmerkmalen auch entscheidend zu einer verbesserten Fälschungssicherheit beitragen.

Vor der Anbringung der Kunststofffolien wird das Basispapier erfindungsgemäß mit einer Polyurethan-Imprägnierung ausgestattet. Die Polyurethan-Imprägnierung erfolgt durch Auftragen einer Zusammensetzung, die mindestens ein Polyurethan enthält, auf beide Hauptflächen des Basispapiers. Die Zusammensetzung findet sich bevorzugt in Form einer wässrigen Dispersion.

Die Polyurethan-Dispersion (oder sonstige Polyurethan-Zusammensetzung) enthält mindestens eine Polymerkomponente und/ oder Prepolymerkomponente und gegebenenfalls übliche Hilfsstoffe. Übliche Hilfsstoffe sind beispielsweise Koaleszenzmittel, Verlaufmittel, Netzmittel, Entschäumungsmittel, Viskositäts-Modifizierungsmittel, Verdickungsmittel, Dispergier-Hilfsmittel, etc. Füllstoffe und/ oder Extender sind bevorzugt nicht enthalten.

Polymerkomponenten und Prepolymerkomponenten im Sinne der Erfindung sind Polymere und Prepolymere auf der Basis von Polyurethanen, d. h. Polyurethan-Homopolymere und Polyurethan-Copolymere. Grundsätzlich können weitere Polyurethan-freie Polymere enthalten sein; es ist jedoch bevorzugt, dass die Polyurethan-Zusammensetzung ausschließlich Polymere und/ oder Prepolymere auf der Basis von Polyurethan enthält.

Wie erwähnt, ist die Imprägnierungszusammensetzung bevorzugt eine wässrige Polyurethan-Dispersion. Wässrige Polyurethan-Dispersionen sind Sekundärdispersionen, d. h. vorgefertigte Polymere/Prepolymere werden zuerst hergestellt und dann in einem zweiten Verfahrensschritt dispergiert. Wässrige Polyurethan-Dispersionen sind beispielsweise erhältlich durch Einbau hydrophiler Gruppen in Isocyanat-terminierte Prepolymere und Dispergieren der entstandenen Ionomere in Wasser. Die Ionomere bilden unter Kettenverlängerung mit Wasser selbst oder mit Diaminen stabile Dispersionen. Geeignete hydrophile Gruppen sind beispielsweise nicht-ionische Polyethylenglykole, anionische Carboxy- oder Sulfonsäuregruppen und kationische Gruppen, wie beispielsweise quartäre Ammoniumgruppen. Je nach hydrophiler Gruppe erhält man nicht-ionische, anionische oder kationische Polyurethan-Dispersionen.

Es können aliphatische oder aromatische Polyurethane oder Gemische davon verwendet werden, wobei aliphatische Polyurethane besonders bevorzugt sind.

Geeignete Polymerkomponenten sind Polyurethan-Homopolymere und Gemische von Polyurethan-Homopolymeren. Dabei kann es sich sowohl um homologe Gemische handeln, d. h. um Homopolymere mit unterschiedlicher Molmasse, als auch um Gemische von untereinander chemisch verschiedenen Homopolymeren, d. h. Gemische von Homopolymeren, die jeweils aus unterschiedlichen Monomeren bestehen.

Geeignete Polymerkomponenten sind auch Polyurethan-Copolymere und Gemische von Polyurethan-Copolymeren. Bevorzugt sind Polyurethan-Acrylat-Copolymere. Wie die Homopolymere können auch die Copolymere homolog oder chemisch unterschiedlich sein. Polyurethan-Copolymere und Gemische von Polyurethan-Copolymeren können jeweils alleine oder im Gemisch mit einem Polyurethan-Homopolymer oder einem Gemisch von Polyurethan-Homopolymeren verwendet werden.

Die Polyurethan-Dispersion kann entweder eine vernetzende oder eine physikalisch trocknende Zusammensetzung sein. Unter "physikalisch trocknend" ist zu verstehen, dass die Zusammensetzung durch Entfernen der Trägerflüssigkeit, d. h. in der Regel des Dispersionsmittels, ohne irgendeine chemische Reaktion der Polymerkomponenten fest wird. Bevorzugt sind vernetzende Zusammensetzungen, denn diese führen zu einer besseren Versiegelung des Basispapiers und verhindern zuverlässiger das Eindringen von Schmutz an den kritischen Stellen des Schichtverbunds, d. h. an den Kanten der Folienverbundbanknote und an eventuellen Schadstellen der Folien. Die Vernetzung findet beispielsweise durch Reaktionen an funktionellen Gruppen der Polymere bzw. Prepolymere statt.

Die Polyurethane können selbstvernetzend sein oder mit Hilfe von Vernetzungsmitteln vernetzen. "Selbstvernetzend" bedeutet nicht unbedingt, dass für die Vernetzung keine weiteren Komponenten erforderlich sind. Es müssen lediglich keine zusätzlichen Komponenten separat zugegeben werden, während eine Vernetzung mit Hilfe von sowieso vorhandenen Substanzen, wie beispielsweise Sauerstoff aus der Luft, als Selbstvernetzung zu betrachten ist. Typischerweise findet die Selbstvernetzung durch Reaktionen geeigneter Substituenten (wie z. B. Hydroxy, Carboxy, Methylol) der Polymere statt. Auch eine Selbstvernetzung durch Strahlungsaktivierung, beispielsweise durch UV-Strahlung, ist möglich. In diesem Fall müssen jedoch die Ausgangskomponenten über eine ausreichend große Molekülmasse verfügen, d. h. über einen ausreichend hohen Polymerisationsgrad, um ein Eindringen in Poren des Basispapiers zu verhindern. Komponenten in den Poren werden typischerweise nicht ausreichend vernetzt, so dass reaktive Ausgangsmaterialien in den Poren zurück bleiben. Andererseits ist aber ein Eindringen der Imprägnierungszusammensetzung in die Poren des Basispapiers erwünscht, da auf diese Weise eine bessere Versiegelung des Basispapiers erreicht wird.

Eine Alternative zur Selbstvernetzung ist die Vernetzung mittels Vernetzungsmitteln, die auch als "Vernetzer" bezeichnet werden. Geeignete Vernetzungsmittel richten sich nach der Art der jeweiligen Polyurethane bzw. der Art vernetzbarer Substituenten der Polymere. Bevorzugte Vernetzungsmittel sind Carbodiimide sowie Polyisocyanate, mit denen beispielsweise Hydroxygruppen enthaltende Polyurethane vernetzt werden können.

Es ist darauf zu achten, die Zusammensetzungen rechtzeitig, d. h. innerhalb der Topfzeit, zu verarbeiten, um zu gewährleisten, dass die Zusammensetzungen ausreichend fluid sind, um in dem gewünschten Umfang in das Basispapier eindringen zu können.

Eine vernetzende Imprägnierungszusammensetzung kann auch erhalten werden durch Zusammengeben von zwei oder mehr Dispersionen und/ oder Lösungen und/ oder Reinstoffen, die jeweils für sich stabil sind, in Kombination miteinander aber reaktiv sind.

Polymerkomponenten, die Halogene, insbesondere Fluor, enthalten, sollten vermieden werden, da derartige Komponenten zu einer Reduktion der Oberflächenenergie des imprägnierten Basispapiers führen, was wiederum zu einer Verschlechterung des Verbunds zwischen Basispapier und den das Basispapier bedeckenden Folien führt. Die Imprägnierungszusammensetzungen sind daher bevorzugt frei von fluorhaltigen Polyurethanen und sonstigen fluorhaltigen Polymeren.

Der Festkörpergehalt (FK) der Imprägnierungsdispersionen wird typischerweise auf etwa 8 Gew.-% bis 25 Gew.-%, bevorzugt etwa 12 Gew.-% bis 20 Gew.-%, eingestellt, je nach gewünschter Auftragsmenge. Geeignete Auftragsmengen im trockenen Zustand liegen im Bereich von 1 g/m² bis 5 g/m² pro Seite, bevorzugt im Bereich von 2 g/m² bis 4 g/m² pro Seite, und besonders bevorzugt bei etwa 3 g/m² pro Seite, d. h. pro Hauptfläche, des Basispapiers. Die Dispersionen werden mit Wasser auf den gewünschten Festkörpergehalt eingestellt.

Nachfolgend werden einige beispielhafte Formulierungen angegeben. Für jede Komponente ist der jeweilige Anteil in Gewichtsprozent angegeben.

Beispielformulierung mit FK = 12 %:

| | |
|---|---|
| Esacote PU 469 | 11,6 |
| Esacote PU 21 S | 19,2 |
| Glycerin (96%-ig) | 0,1 |
| Carbodilite V-02-L2 | 0,6 |
| Wasser | 68,5. |

Beispielformulierung mit FK = 20 %:

| | |
|---|---|
| Esacote PU 469 | 19,3 |
| Esacote PU 21 S | 31,9 |
| Glycerin (96 %ig) | 0,1 |
| Carbodilite V-02-L2 | 1,0 |
| Wasser | 47,7. |

Esacote PU 21 S und Esacote PU 469 sind wässrige Dispersionen auf der Basis anionischer aliphatischer Polyurethane des Herstellers Lamberti, Italien. Hinsichtlich der Filmeigenschaften ist Esacote PU 469 weicher und elastischer als Esacote PU 21 S.

Carbodilite V-02-L2 ist eine wässrige Lösung eines multifunktionalen Carbodiimids (Nisshinbo Industries Inc., Japan) und wirkt als Vernetzer.

Alternative Formulierungen können durch Variationen des Verhältnisses von Esacote PU 469 und Esacote PU 21 S erhalten werden, und auch der Anteil des Vernetzers Carbodilite kann variiert werden, um den Vernetzungsgrad zu regulieren.

Als ein besonders bevorzugtes Beispiel für ein selbstvernetzendes Polymer kann NeoPac E 125 genannt werden. Dabei handelt es sich um eine wässrige Dispersion eines aliphatischen, selbstvernetzenden Polyurethan-Acrylat-Copolymers des Herstellers DSM NeoResins, NL. NeoPac E 125 wird bevorzugt ohne weitere Zusätze eingesetzt, beispielsweise mit einem Festkörpergehalt von 20 %.

Die erfindungsgemäße Imprägnierung des Basispapiers mit einer Polyurethan-Zusammensetzung erfolgt bevorzugt an ungeleimtem Papier, d. h. die Polyurethan-Imprägnierung ersetzt die Oberflächenleimung. Eine vorherige Leimung des Basispapiers verschlechtert die Schutzwirkung der erfindungsgemäßen Polyurethan-Imprägnierung, ist aber selbstverständlich auch von der Erfindung mit umfasst.

Die erfindungsgemäße Polyurethan-Imprägnierung wird nach Art einer Oberflächenleimung durchgeführt, wobei jedoch, abhängig von den Imprägnierungsbedingungen, Effekte ähnlich einer Oberflächenleimung oder Effekte ähnlich einer Masseleimung erzielt werden können. Soll lediglich eine Versiegelung der Oberflächen des Basispapiers erreicht werden, wird eine kurze Imprägnierungszeit gewählt und die Imprägnierungszusammensetzung höherviskos eingestellt. Soll die Polyurethan-Imprägnierung das Volumen des Basispapiers teilweise oder vollständig durchdringen, wird eine längere Imprägnierungszeit gewählt und die Imprägnierungszusammensetzung niedrigerviskos eingestellt. Es ist in diesem Fall auch vorteilhaft, Prepolymere mit geringem Polymerisationsgrad zu wählen.

Die Imprägnierung wird bevorzugt in einem Temperaturbereich von etwa 15 °C bis 35 °C durchgeführt, besonders bevorzugt etwa bei Raumtemperatur, d. h. bei 25 °C +/- 5 °C. Die Imprägnierungszusammensetzungen sollten keinen zu hohen Temperaturen ausgesetzt werden, da die Komponenten der Imprägnierungszusammensetzung (z. B. Verseifungsmittel) bei zu hohen Temperaturen verdampfen und die Dispersion "zusammenbrechen" kann. Es ist zwar grundsätzlich möglich, die Polyurethan-Imprägnierung nach der Papierherstellung (offline) durchzuführen, aber bevorzugt wird die Imprägnierung inline bei der Papierherstellung durchgeführt. Beispielsweise kann die Imprägnierung im Leimbad, im Tauchbad oder in der Sumpfleimpresse der Papiermaschine erfolgen. Dabei ist anzumerken, dass die Feuchte des Papiers absolut bei etwa 1,5 % bis 2,0 % liegt.

Insbesondere wird bevorzugt, dass die Imprägnierung im Tauchbad der Papiermaschine erfolgt. Die Polyurethan-Imprägnierung im Tauchbad der Papiermaschine zeigt hinsichtlich der Spaltungseigenschaften des Folienverbundes eine erhebliche Verbesserung. Des Weiteren wird die Neigung zum Eindringen von Schmutz über die Schnittkanten der Folienverbundbanknote reduziert. Die vorteilhaften Effekte der Polyurethan-Imprägnierung im Tauchbad beruhen darauf, dass durch die längere Verweilzeit der flüssigen Imprägnierung zwischen dem Eintauchen der Papierbahn in das Tauchbad und dem Abpressen der überschüssigen Imprägnierung im Walzennip der Leimpresse das Imprägnierungsmittel erheblich mehr Zeit hat, das Blatt vollständig zu durchdringen. Bei der Imprägnierung im reinen Leimpressenverfahren hingegen taucht das Papier in die Imprägnierung ein und wird sozusagen zeitgleich wieder abgepresst. Trotz des Hineinpressens von Imprägniermittel dringt dieses nicht gleichmäßig in den Querschnitt des Papiers ein, so dass es zur Mitte des Papiers hin zu einer Verarmung an Imprägniermittel kommt.

Bei der Imprägnierung im Tauchbad der Papiermaschine wird mit Vorteil ein kunststofffaserhaltiges Baumwollpapier verwendet, wobei der Anteil der Kunststofffasern vorzugsweise von 1 bis 15 Gew.-%, weiter bevorzugt von 3 bis 8 Gew.-% und insbesondere bevorzugt von 5 bis 6 Gew.-%, beträgt. Als Kunststofffasern können insbesondere Polyamidfasern oder Polyesterfasern eingesetzt werden. Mit Vorteil handelt es sich bei den Kunststofffasern um Polyamidfasern mit einer Faserfeinheit bzw. einem Titer von 0,5 bis 2,5 dtex (Dezitex) und einer Länge von 2 bis 6 mm. Weiter bevorzugt sind Polyamidfasern mit einer Faserfeinheit von 0,8 bis 1,2 dtex und einer Länge von 3 bis 5 mm. Durch die Kombination des kunststofffaserhaltigen Baumwollpapiers mit der Polyurethan-Imprägnierung erhöht sich die Spaltfestigkeit des Folienverbundes deutlich. Die Kunststofffasern stellen gewissermaßen Störstellen für das Spalten in der Ebene des Folienverbundes dar.

Zur Aufbringung der Kunststofffolien auf die beiden Hauptflächen des Basispapiers stehen verschiedene Verfahren zur Verfügung. Beispielsweise kann die Folie direkt auf die Papierbahn extrudiert werden oder sie kann aufkaschiert werden. Kaschieren ist das bevorzugte Verfahren. Hierbei wird ein Klebstoff bevorzugt auf die Kunststofffolien aufgebracht, angetrocknet und gegebenenfalls durch erhöhte Temperaturen, beispielsweise maximal 80 °C bis 90 °C, aktiviert. Die Folie soll nicht angeschmolzen oder durch Hitze übermäßig belastet werden. Dies hat den Vorteil, dass eventuell vorhandene Reckungen der Folien nicht zerstört werden, sondern auch nach dem Kaschieren noch vorhanden sind. Der Kaschiervorgang erfolgt bevorzugt über Rollenkaschierung, so dass auch sehr dünne Folien mit einer Dicke von wenigen Mikrometern ohne Probleme, wie die Bildung von Blasen oder Verwerfungen, auf das Basispapier aufkaschiert werden können. Denkbar ist selbstverständlich auch das Aufbringen des Klebers auf das Basispapier vor dem Kaschiervorgang.

Als Klebstoff wird vorzugsweise ein lösemittelfreier oder lösemittelhaltiger Kaschierkleber verwendet. Denkbar ist auch ein wasserlöslicher (Dispersion) oder ein thermisch aktiver Kaschierkleber. Die eingesetzten Mengen an Kaschierkleber können in breiten Bereichen variieren, wobei Mengen von etwa 3 g/m² bis 9 g/m² bevorzugt und 4 g/m² bis 6 g/m² ganz besonders bevorzugt sind. Der Klebstoff kann jedoch auch in sehr viel größeren Mengen verarbeitet werden, ohne die Eigenschaften des Verbundes zu schädigen. Es wird ein fester untrennbarer Verbund zwischen Basispapier und der jeweils abdeckenden Folie erzielt. Es ist bevorzugt, beide Hauptflächen des Basispapiers jeweils mittels einer Klebstoffschicht, bevorzugt mittels eines Kaltkaschierklebstoffs, mit einer abdeckenden Folie zu verbinden. Dabei können gleiche oder verschiedene Klebstoffe verwendet werden. Verschiedene Klebstoffe können insbesondere dann sinnvoll sein, wenn das Basispapier aus unterschiedlichen Papierlagen besteht und/ oder mit unterschiedlichen Folien verbunden werden soll.

Häufig ist es erwünscht, die Kunststofffolien zu bedrucken. Um in diesen Fällen eine bessere Farbannahme der Folien zu erreichen, können die Folien vollflächig oder zumindest an den erforderlichen Stellen mit einer Druckannahmeschicht, wie sie im Stand der Technik bekannt ist, versehen werden.

Die erfindungsgemäße Folienverbundbanknote wird für gewöhnlich nicht als Einzel-Folienverbundbanknote hergestellt, sondern in Form eines Folienverbundbanknoten-Bogens oder eines Folienverbundbanknoten-Endlosmaterials mit jeweils einer Vielzahl von Einzelnutzen. Dazu wird in einer Papiermaschine ein mindestens einlagiges Basispapier, vorzugsweise als Basispapierbahn, hergestellt, das Basispapier dann an seinen beiden Hauptflächen jeweils vollflächig mit der Polyurethan-Imprägnierungszusammensetzung imprägniert und das imprägnierte Basispapier getrocknet. Anschließend erfolgt die Ausstattung des Basispapiers mit den abdeckenden Kunststofffolien. Wie erwähnt, erfolgt diese Ausstattung bevorzugt mittels Kaltkaschierung. Dazu wird entweder auf die Folien oder auf die Hauptflächen des Basispapiers ein geeigneter Klebstoff aufgetragen, und Basispapier und Folie bzw. Folien dann zusammengeführt. Es ist bevorzugt, den Klebstoff auf die Folien aufzutragen oder an einer Seite auf die Folie und an der anderen Seite auf das Papier, da dann problemlos in einem Arbeitsgang beide Folien mit dem Basispapier zusammengeführt und miteinander verbunden werden können, beispielsweise in einer Laminierpresse.

In oder auf dem Basispapier und/ oder in oder auf den Folien und/oder im Klebstoff und/oder separat zwischen Basispapier und Kunststofffolie können Sicherheitselemente vorgesehen werden. Es können an dem Folienverbund-Banknotenmaterial auch noch weitere Bearbeitungsschritte durchgeführt werden, beispielsweise die Ausstattung mit Druckannahmeschichten. Abschließend werden von dem fertigen Folienverbund-Banknotenmaterial Einzel-Folienverbundbanknoten abgetrennt.

Sicherheitselemente bzw. Sicherheitsmerkmale können beispielsweise auf das Basispapier aufgebracht oder in das Volumen des Basispapiers eingebracht werden. Sollen die Sicherheitsmerkmale in das Volumen des Basispapiers eingebracht werden, geschieht dies vorzugsweise bereits bei der Papierherstellung durch Einbringung der entsprechenden Merkmale in die Papiermasse.

Als klassisches Sicherheitsmerkmal sind Wasserzeichen zu nennen, die in die Papierschicht eingearbeitet werden. Alternativ oder zusätzlich kann auch ein Sicherheitsfaden in das Papier eingearbeitet werden. Ein solcher Sicherheitsfaden kann beispielsweise als Fenstersicherheitsfaden ausgeführt werden, der auf der Vorder- und/oder der Rückseite des Basispapiers erscheint, oder der Sicherheitsfaden kann so in den Verbund eingearbeitet werden, dass er im ganzen sichtbar zwischen dem Basispapier und einer Folie zu liegen kommt. Dieser Sicherheitsfaden wird beispielsweise während der Herstellung des Verbunds eingebracht und wird zwischen Basispapier und Folie fixiert, gegebenenfalls unterstützt durch einen Kaschierklebstoff.

Als in das Volumen des Basispapiers einzubringende Sicherheitsmerkmale kommen Merkmalsstoffe mit einer visuell und/ oder maschinell nachweisbaren physikalischen Eigenschaft in Frage. Die Merkmalsstoffe können beispielsweise magnetische, elektrisch leitfähige, lumineszierende, lichtbeugende, lichtpolarisierende, photochrome, thermochrome oder lichtinterferierende Eigenschaften aufweisen, und sie können vollflächig gleichmäßig verteilt vorliegen oder Muster bilden. Bei den lumineszierenden Merkmalsstoffen kann es sich beispielsweise um Lumineszenzstoffe handeln, die mit UV-Licht anregbar sind und im visuellen Spektralbereich emittieren. Im Falle einer maschinellen Überprüfung können jedoch auch im unsichtbaren Spektralbereich, vorzugsweise im IR-Spektralbereich, emittierende Lumineszenzstoffe verwendet werden.

Alternativ oder zusätzlich können Sicherheitsmerkmale auf eine Oberfläche des Basispapiers oder auf beide Oberflächen des Basispapiers aufgebracht werden, vorzugsweise als Aufdruck. Als Sicherheitsmerkmale für die Basispapieroberfläche(n) kommen zum einen die oben erwähnten visuell und/ oder maschinell detektierbaren Sicherheitsmerkmale infrage. Zum anderen eignet sich besonders der Stichtiefdruck, der beim Druckvorgang ein typisches Relief auf dem Bedruckstoff erzeugt, das leicht ertastbar ist. Der Stichtiefdruck kann farbführend und/oder als Blindprägung ausgeführt werden und ist bei Beschichtung mit einer sehr dünnen Folie von nur wenigen Mikrometern Dicke trotz der Folie ertastbar.

Auf einer Basispapieroberfläche oder auf beiden Basispapieroberflächen können auch optisch variable Sicherheitselemente vorgesehen werden. Optisch variable Elemente oder Druckfarben, die aufgrund von Lichtbeugung oder Lichtinterferenz ein vom Betrachtungswinkel abhängiges Farbspiel zeigen, benötigen für eine gute Sichtbarkeit dieses Effekts einen möglichst glatten Untergrund, so dass es sinnvoll sein kann, das Basispapier zumindest an den infrage kommenden Stellen mit einer Primerschicht vorzubehandeln. Sicherheitselemente dieser Art sind beispielsweise Hologramme, Kinegramme oder andere Beugungsstrukturen, Mattstrukturen, folienartige Flüssigkristall- oder Interferenzschichtaufbauten, aber auch Druckfarben, die Interferenzschichtpigmente oder Flüssigkristallpigmente oder andere Effektpigmente, wie glänzende Metalleffektpigmente, enthalten. Auch einfache Metallschichten oder Metalleffektaufdrucke können vorgesehen werden.

Die auf mindestens eine Oberfläche des Basispapiers aufgebrachten Sicherheitsmerkmale können in Form einer Codierung vorliegen. Codierungen sind beispielsweise erzeugbar durch die Verwendung mehrerer Merkmalsstoffe und/oder die Variation der Konzentration eines oder mehrerer Merkmalsstoffe in einer Druckfarbe.

Außerdem besteht die Möglichkeit, mittels Laserenergie Informationen in das Papier einzuschreiben, beispielsweise Mikroschriftzüge oder Portraits mit unterschiedlichen Schattierungen, je nach Laserenergie.

Dadurch, dass das Basispapier an seinen beiden Hauptflächen vollflächig mit Kunststofffolien abgedeckt ist, sind die Sicherheitsmerkmale auf und/ oder in dem Basispapier gegen Manipulationen geschützt, so dass eine hohe Fälschungssicherheit gewährleistet ist.

Wie das Basispapier können auch die Kunststofffolien oder zumindest eine der Kunststofffolien mit Sicherheitsmerkmalen ausgerüstet werden, die auf die Folienoberfläche aufgebracht und/ oder in das Volumen der Folie eingebracht werden.

Als Sicherheitsmerkmale sind grundsätzlich dieselben Sicherheitsmerkmale geeignet, die auch beim Basispapier Anwendung finden, also z. B. Wasserzeichen jeglicher Art. Erwähnt werden sollen ferner insbesondere die Merkmalsstoffe mit einer visuell und/ oder maschinell nachweisbaren physikalischen Eigenschaft, die in das Folienvolumen eingebracht oder auf eine Folienoberfläche aufgebracht werden können. Zur Aufbringung auf die Folienoberflächen sind natürlich auch die im Zusammenhand mit dem Basispapier erwähnten optisch variablen Sicherheitselemente geeignet. Hier ist besonders vorteilhaft, dass der optisch variable Effekt durch den glatten Untergrund, wie ihn Kunststofffolien bieten, sehr gut zur Geltung kommen.

Bei auf einer Folienoberfläche aufgebrachten Sicherheitsmerkmalen kann das Sicherheitsmerkmal auf der dem Basispapier zugewandten Seite und/ oder auf der von dem Basispapier abgewandten Seite zu liegen kommen. Das betreffende Sicherheitsmerkmal liegt daher entweder auf der Außenseite des Substrates oder auf der Innenseite des Substrates vor. Insbesondere Sicherheitsmerkmale, die einen weniger festen Verbund mit Kunststofffolien eingehen, werden vorzugsweise auf der Innenseite des Schichtverbunds angeordnet, so dass ihre schlechte Zugänglichkeit eine Fälschung erschwert.

Sicherheitsmerkmale für die außenseitigen Folienoberflächen sind Aufdrucke oder Druckbilder, die im Stichtiefdruck ausgeführt sind. Dabei wird eine leicht ertastbare Reliefoberfläche erzeugt. Der Druck kann dabei zum einen auf das fertig kaschierte Substrat erfolgen, so dass der fertig laminierte Schichtverbund wie ein konventionelles Sicherheitspapier verarbeitet und bedruckt werden kann. Zum anderen kann die Kunststofffolie noch bevor sie mit dem Basispapier verbunden wird, separat bedruckt werden und erst danach mit dem Basispapier verbunden werden. Der Stichtiefdruck kann farbführend und/oder als Blinddruck ausgeführt werden.

Unter den optisch variablen Elementen und Druckfarben eignen sich insbesondere Metallisierungen der Kunststofffolie, gegebenenfalls in Kombination mit Beugungsstrukturen. Die Metallisierung kann dabei opak oder semitransparent ausgeführt sein, wobei die Semitransparenz durch sehr dünne Metallschichten oder durch Rasterung der Metallschicht erreicht wird. Unter "Semitransparenz" ist zu verstehen, dass die Metallisierung eine Lichtdurchlässigkeit von unter 100 %, bevorzugt von 90 % aufweist. Werden die Metallisierungen zusätzlich mit beispielsweise geprägten Beugungsstrukturen versehen, ergeben sich außergewöhnlich brillante holographische Effekte, die auf herkömmliche Art nicht zu erzeugen sind.

Außerdem kann mindestens eine der Kunststofffolien zumindest teilweise mit einer Mikroperforation versehen werden, so dass es bei mechanischen Manipulationen zur Zerstörung der betreffenden Folie kommt. Diesbezüglich wird auf die EP 1545 902 B1 verwiesen.

Ebenso wie das Basispapier und die Kunststofffolien kann auch der Klebstoff mit Sicherheitsmerkmalen ausgerüstet werden. In Frage kommen hierfür grundsätzlich alle Sicherheitsmerkmale, die oben als für die Einbringung in das Volumen des Basispapiers und/oder der Folie geeignet beschrieben wurden. Hinsichtlich der Art der Sicherheitsmerkmale und der mit den Sicherheitsmerkmalen in den Klebstoffen erzielbaren Effekte wird ebenfalls auf die EP 1545 902 B1 verwiesen.

Die Kunststofffolien sind bevorzugt transparent, so dass Sicherheitsmerkmale unter den Kunststofffolien erkennbar sind. Sie können farblos oder auch gefärbt sein, ebenso wie Basispapier und Klebstoff, wobei sich durch geeignete Farbkombinationen interessante Effekte erzeugen lassen. Beispielsweise können Wasserzeichen im Basispapier durch farbige Folien farbig erscheinen.

Da sowohl das Basispapier als auch eine oder beide Kunststofffolien, als auch gegebenenfalls vorhandene Klebstoffschichten mit Sicherheitsmerkmalen ausgestattet werden können, besteht die Möglichkeit, die in Papier und/ oder Folie und/ oder Klebstoff vorliegenden Sicherheitsmerkmale so zu kombinieren, dass sie sich zu einer Gesamtinformation ergänzen oder aber auch registerhaltig zueinander eingebracht sind.

Die vorliegende Erfindung wird nachfolgend anhand von Figuren noch weiter veranschaulicht. Es wird darauf hingewiesen, dass die Figuren lediglich schematische Darstellungen sind und die dargestellten Proportionen nicht der Realität entsprechen. Die Erfindung ist selbstverständlich nicht auf die gezeigten Ausführungsformen beschränkt. Die gezeigten Ausführungsformen weisen für sich genommen, aber auch in Kombination der Merkmale der verschiedenen Ausführungsformen die erfindungsgemäßen Vorteile auf.

Es zeigen:
- Fig. 1: eine erfindungsgemäße Folienverbundbanknote in Aufsicht,
- Fig. 2: einen Schnitt entlang der Linie A-B durch die erfindungsgemäße Folienverbundbanknote gemäß Fig.1,
- Fig. 3: eine weitere Ausführungsform einer erfindungsgemäßen Folienverbundbanknote in Aufsicht, und
- Fig. 4: einen Schnitt entlang der Linie A-B durch die erfindungsgemäße Folienverbundbanknote gemäß Fig. 3.

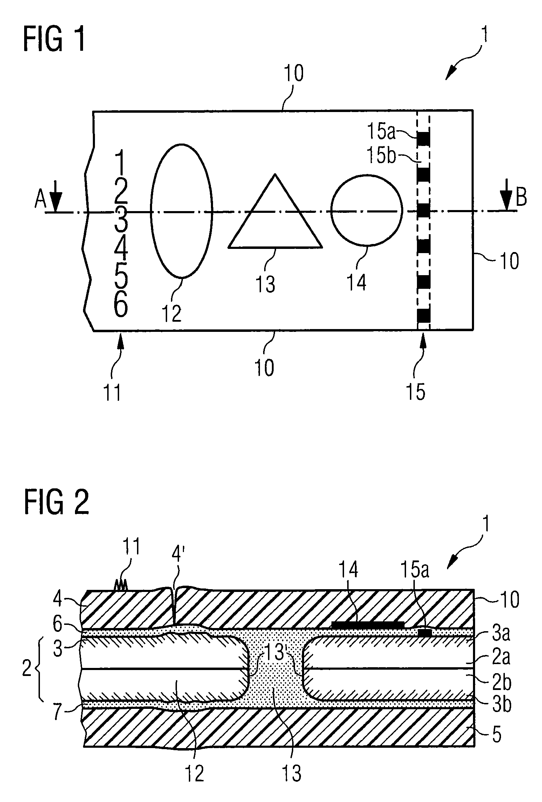

Fig.1 zeigt eine erfindungsgemäße Folienverbundbanknote 1 in Aufsicht. Die Folienverbundbanknote besteht aus einem Basispapier, das durch zwei Kunststofffolien abgedeckt ist. In der Darstellung in Aufsicht ist nur eine der Kunststofffolien, die Folie 4, sichtbar. Das Basispapier wird üblicherweise aus Baumwollfasern oder anderen Fasern von Einjahrespflanzen hergestellt. Für manche Anwendungen kann es jedoch auch sinnvoll sein, die natürlichen Fasern oder einen Teil der natürlichen Fasern durch Kunststofffasern, insbesondere Polyamidfasern oder Polyesterfasern, zu ersetzen. Während der Herstellung des Basispapiers 2 werden bereits einige Sicherheitselemente in das Papier eingebettet, bei der gezeigten Ausführungsform ein Fenstersicherheitsfaden 15 und ein Portrait-Wasserzeichen 12. Der Sicherheitsfaden 15 wird quasi in das Papier eingewebt, so dass er in den Bereichen 15a direkt an die Oberfläche des Papiers tritt, während er in den Bereichen 15b vollständig in die Papiermasse eingebettet ist. Das Basispapier 2 weist außerdem eine Aussparung 13 auf, die beispielsweise nach der Herstellung des Basispapiers ausgestanzt werden kann, bevorzugt aber bereits während der Papierherstellung eingebracht wird. Auf diese Weise lassen sich die typischen "Büttenränder" erzeugen. Zwischen dem Basispapier 2 und der Kunststofffolie 4 befindet sich ein Hologramm-Patch 14. Die Folie 4 ist außerdem auf ihrer Außenseite im Stahlstichtiefdruck mit einer Zahlenreihe 7 bedruckt. Die Folienverbundbanknote weist Kanten (Stirnflächen) 10 auf.

Fig. 2 zeigt einen Schnitt durch die erfindungsgemäße Folienverbundbanknote 1 entlang der strichpunktierten Linie A-B und Fig. 1. In der Schnittdarstellung der Fig. 2 ist ersichtlich, dass das Basispapier 2 aus zwei Lagen 2a, 2b besteht, und dass diese Lagen 2a, 2b jeweils durch Klebstoffschichten 6, 7 mit den Kunststofffolien 4, 5 verbunden sind. Die Aussparung 13 geht durch beide Basispapier-Lagen 2a, 2b hindurch, wobei das Basispapier 2 hier die Büttenränder 13' mit einem unregelmäßigen, fasrigen Rand aufweist. An seinen Außenoberflächen, d. h. an den Flächen, die mit den Folien 4, 5 verklebt sind, und an den Rändern 13' ist das Basispapier 2 erfindungsgemäß mit einer Polyurethan-Imprägnierung ausgestattet. Die Polyurethan-Imprägnierung der Basispapier-Lage 2a ist mit der Bezugsziffer 3a bezeichnet, und die Polyurethan-Imprägnierung der Basispapierlage 2b ist mit der Bezugsziffer 3b bezeichnet. Die Polyurethan-Imprägnierung 3 versiegelt die Oberflächen des Basispapiers 2 und dringt in einem gewissen Umfang auch in das Volumen des Basispapiers 2 ein. Die Polyurethan-Imprägnierung 3 bewirkt, dass die Folienverbundbanknote 1 besser gegen das Eindringen von Verschmutzungen in ihre "Problemzonen" geschützt ist. Die besonderen Problemzonen der Folienverbundbanknote sind Risse in den Deckfolien, wie sie bei langer Umlaufdauer und starker Beanspruchung gelegentlich auftreten. In Fig. 2 besitzt die Folie 4 einen derartigen Riss 4'. Weitere Problemzonen befinden sich an den Kanten 10, an denen der Schichtaufbau des Verbunds ungeschützt offen liegt. Verschmutzungen, insbesondere Flüssigschmutz, können hier leicht in das Basispapier 2 eindringen, was zu den bekannten "Trauerrändern" und im schlimmsten Fall zu einer Spaltung des Schichtverbunds führt. Durch die erfindungsgemäße Polyurethan-Imprägnierung wird hier eine deutliche Verbesserung gegenüber Folienverbundbanknoten, die keine Polyurethan-Imprägnierung aufweisen, erzielt. Es versteht sich, dass die Vorteile der Erfindung auch erreicht werden, wenn anstelle des zweilagigen Basispapiers 2 ein einlagiges Basispapier 2 eingesetzt wird.

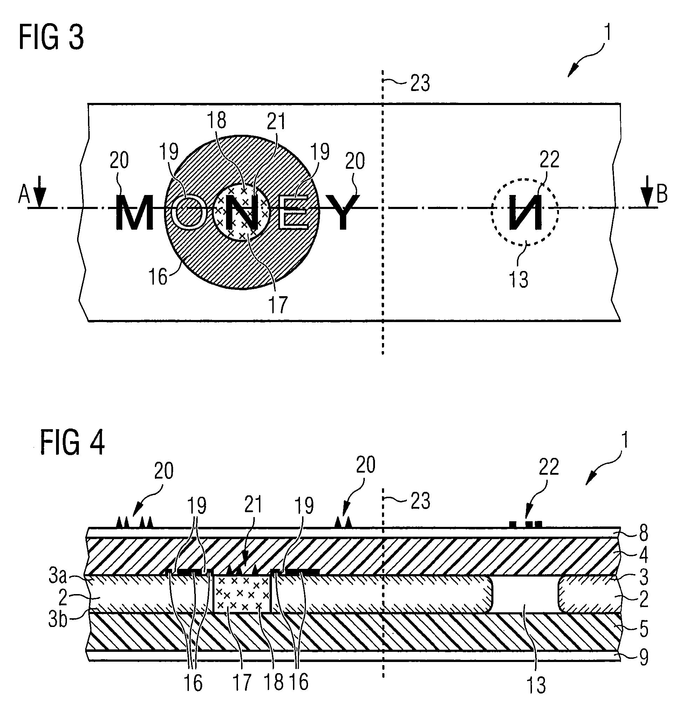

Die Figuren 3 und 4 zeigen eine weitere Ausführungsform einer erfindungsgemäßen Folienverbundbanknote 1. Fig. 3 ist eine Darstellung in Aufsicht (auf die Deckfolie 4), und Fig. 4 ist eine Schnittdarstellung entlang der Linie A-B in Fig. 3. Die in Fig. 3 und Fig. 4 gezeigte Folienverbundbanknote 1 besteht aus einem einlagigen Basispapier 2, das an seinen beiden Hauptflächen, d. h. an seinen beiden Oberflächen, erfindungsgemäß mit Polyurethan-Imprägnierungen 3a, 3b, die zusammen die Polyurethan-Imprägnierung 3 bilden, ausgestattet ist, den Kunststofffolien 4, 5 und Druckannahmeschichten 8, 9 auf den Kunststofffolien 4, 5. Die Folienverbundbanknote weist mehrere Sicherheitsmerkmale auf, die in verschiedenen Schichten registerhaltig angeordnet sind und sich zu der Gesamtinformation "MONEY" ergänzen. Für die Art der Ergänzung sind zwei Alternativen angegeben, wobei die Alternativen die Ausführung des Buchstabens "N" betreffen. Es wird zuerst die Alternative beschrieben, die links von der punktierten Linie 23 dargestellt ist. Bei dieser ersten Alternative ist das Basispapier 2 mit einer kreisförmigen Metallisierung 16 ausgestattet, die beispielsweise durch Vakuumbedampfung mit Kupfer (goldfarbene Metallisierung) oder mit Aluminium (silberfarbene Metallisierung) hergestellt werden kann. In die Metallisierung sind Aussparungen 19 eingearbeitet, wobei die Aussparungen 19 die Buchstaben "O" und "E" bilden. Die Buchstaben "M" und "Y", die mit den Bezugsziffern 20 bezeichnet sind, sind Aufdrucke im Stichtiefdruck auf die Oberfläche der Folie 4 (die nicht notwendigerweise eine Druckannahmeschicht 8 erfordern würden) und der Buchstabe "N", mit der Bezugsziffer 21 bezeichnet, ist ein Aufdruck im Stichtiefdruck auf eine Oberfläche des Basispapiers 2. In dem kreisförmigen Bereich 17 innerhalb der ringförmigen Metallisierung 16 befindet sich in dem Volumen des Basispapiers 2 ein Lumineszenzstoff 18. Bei dieser Ausführungsform sind die Buchstaben zwar in verschiedenen Ebenen, aber unmittelbar nebeneinander angeordnet, so dass sie sich insgesamt ohne irgendwelche Manipulationen an der Folienverbundbanknote in sinnvoller Weise ergänzen. In diesem Fall ist es irrelevant, wie die Folienverbundbanknote 1 rechtsseitig der punktierten Linie 23 gestaltet ist.

Anders bei der alternativen Ausführungsform. Die alternative Ausführungsform ist linksseitig der punktierten Linie 23 im Wesentlichen identisch mit der ersten Ausführungsform, abgesehen davon, dass der Aufdruck 21 im Stichtiefdruck des Buchstabens "N" fehlen soll. Dieser Buchstabe ist in Fig. 3 "wegzudenken". Dafür weist das Basispapier 2 eine Aussparung 13 auf, die hinsichtlich Form und Größe den Bereich 17 entspricht. Auf der Druckannahmeschicht 8 ist mit Druckfarbe ein Aufdruck 22 aufgedruckt, wobei sich der Druckfarbenaufdruck 22, in Aufsicht auf die Banknote gesehen, innerhalb der Aussparung 13 befindet. Die Aussparung 13 kann durch Knicken der Folienverbundbanknote 1 an der punktierten Linie 23 mit dem Bereich 17 zur Deckung gebracht werden, so dass der Druckfarben-Aufdruck 23 den bei dieser Ausführungsform fehlenden Stahlstichtiefdruck-Aufdruck 21 ersetzt. Der Aufdruck 22 stellt daher den Buchstaben "N" spiegelbildlich dar. Selbstverständlich kann bei der Ausführungsform der Fig. 3 und 4 anstelle des einlagigen Basispapiers 2 auch ein zwei- oder mehrlagiges Basispapier 2 mit Vorteil eingesetzt werden.

Die erfindungsgemäße Folienverbundbanknote mit Polyurethan-imprägniertem Basispapier weist gegenüber Folienverbundbanknoten, deren Basispapier nicht mit Polyurethan imprägniert ist, deutliche Vorteile auf. Dies wurde durch Beanspruchungstests, die durchgeführt wurden, wie in der firmeneigenen Prüfanweisung "Beanspruchungstest von Banknoten durch Degrading/Flüssigschmutz" beschrieben, bestätigt. Bei dem Testverfahren wird die Banknote, d. h. sowohl erfindungsgemäß imprägnierte Banknoten, als auch Banknoten ohne Polyurethan-Imprägnierung, die aber ansonsten mit den erfindungsgemäßen Banknoten identisch sind, wechselweise in der Degrading-Apparatur sowie in einer wässrigen und angefärbten Schmutzlösung behandelt. Der Ablauf ist wie folgt:
250 Umdrehungen Degrading
20 Minuten Schmutzlösung
250 Umdrehungen Degrading
20 Minuten Schmutzlösung
250 Umdrehungen Degrading
20 Minuten Schmutzlösung
250 Umdrehungen Degrading

Nach jeder Behandlung in der Schmutzlösung wird die zu prüfende Folienverbundbanknote mit saugfähigem Papier abgegautscht.

Es erweist sich, dass die erfindungsgemäß imprägnierte Folienverbundbanknote zum einen durch die Kombination von Papier und Kunststofffolie die positiven Eigenschaften von Papier und Kunststoffmaterialien vereinigt, d. h. die Banknote zeigt hinsichtlich Griff, Klang, Knitterfähigkeit, etc., Papiereigenschaften, wobei aber gleichzeitig durch die Kunststofffolien eine Verbesserung der mechanischen Festigkeit, der Einreißfestigkeit und der Beständigkeit gegen ein Verschmutzen der Außenoberflächen erreicht wird. Negative Eigenschaften der Kunststofffolien, wie die Schrumpfungsneigung, werden vermieden.

Außerdem ist besonders vorteilhaft, dass das Eindringen von flüssigen Substanzen sowohl hydrophiler als auch lipophiler Natur an den Rändern der Banknote in den Schichtverbund, was im schlimmsten Fall zu einer Trennung des Schichtverbunds führen kann, durch die Polyurethan-Imprägnierung deutlich gehemmt wird, was unmittelbar durch die verringerte Ausbildung von "Trauerrändern" ersichtlich ist. An Rissen der Kunststofffolien, wie sie bei extremer Beanspruchung entstehen können, ist dasselbe Phänomen zu beobachten. Die Tendenz zur Rissbildung an den Oberflächen der Kunststofffolien ist jedoch gering, d. h. das Polyurethanimprägnierte Basispapier verfügt über ähnliche Elastizitätseigenschaften wie die Kunststofffolien und ist daher zur Verbindung mit Kunststofffolien besonders gut geeignet. Insgesamt wird durch die Polyurethan-Imprägnierung die Umlaufdauer der Folienverbundbanknoten in vorteilhafter Weise erhöht.

## Patentansprüche

1. Folienverbundbanknote (1) aufweisend ein mindestens einlagiges Basispapier (2) und zwei Kunststofffolien (4, 5), die dieselben Flächenabmessungen wie das Basispapier (2) besitzen und das Basispapier (2) an seinen beiden Hauptflächen jeweils vollflächig bedecken, **dadurch gekennzeichnet, dass** das Basispapier (2) an seinen beiden Hauptflächen jeweils vollflächig mit einer Zusammensetzung imprägniert ist, die eine Polyurethan-Imprägnierung (3) bildet.

2. Folienverbundbanknote (1) nach Anspruch 1, **dadurch gekennzeichnet, dass** das Basispapier (2) zwei oder mehr Lagen (2a, 2b) aufweist.

3. Folienverbundbanknote (1) nach Anspruch 1 oder 2, **dadurch gekennzeichnet, dass** das Basispapier (2) ungeleimtes Papier ist.

4. Folienverbundbanknote (1) nach einem der Ansprüche 1 bis 3, **dadurch gekennzeichnet, dass** das Basispapier (2) an mindestens einer seiner Hauptflächen mittels einer Klebstoffschicht (6,7) mit einer der Kunststofffolien (4, 5) verklebt ist.

5. Folienverbundbanknote (1) nach einem der Ansprüche 1 bis 4, **dadurch gekennzeichnet, dass** mindestens eine der Kunststofffolien (4, 5) an ihrer von dem Basispapier (2) abgewandten Oberfläche mindestens teilflächig mit einer Druckannahmeschicht (8, 9) ausgestattet ist.

6. Folienverbundbanknote (1) nach einem der Ansprüche 1 bis 5, **dadurch gekennzeichnet, dass** die Imprägnierungszusammensetzung eine wässrige Polyurethan-Dispersion ist.

7. Folienverbundbanknote (1) nach einem der Ansprüche 1 bis 6, **dadurch gekennzeichnet, dass** die Imprägnierungszusammensetzung als Polyürethan-Komponente ein Polyurethan-Homopolymer oder ein Gemisch von Polyurethan-Homopolymeren enthält.

8. Folienverbundbanknote (1) nach einem der Ansprüche 1 bis 7, **dadurch gekennzeichnet, dass** die Imprägnierungszusammensetzung als Polyurethan-Komponente ein Polyurethan-Copolymer oder ein Gemisch von Polyurethan-Copolymeren, bevorzugt ein Polyurethan-Acrylat-Copolymer, enthält.

9. Folienverbundbanknote (1) nach einem der Ansprüche 1 bis 8, **dadurch gekennzeichnet, dass** die Imprägnierungszusammensetzung eine vernetzende Zusammensetzung oder eine physikalisch trocknende Zusammensetzung ist.

10. Folienverbundbanknote (1) nach einem der Ansprüche 1 bis 9, **dadurch gekennzeichnet, dass** die Imprägnierungszusammensetzung eine selbstvernetzende Zusammensetzung ist.

11. Folienverbundbanknote (1) nach einem der Ansprüche 1 bis 9, **dadurch gekennzeichnet, dass** die Imprägnierungszusammensetzung eine Zusammensetzung ist, die mittels Vernetzungsmitteln vernetzt.

12. Folienverbundbanknote (1) nach Anspruch 7 oder 11, **dadurch gekennzeichnet, dass** die Imprägnierungszusammensetzung als Polyurethan-Komponente ein Gemisch von anionischen aliphatischen Polyurethan-Homopolymeren und ein multifunktionales Carbodiimid als Vernetzer enthält.

13. Folienverbundbanknote (1) nach Anspruch 8 oder 10, **dadurch gekennzeichnet, dass** die Imprägnierungszusammensetzung als Polyurethan-Komponente ein aliphatisches selbstvernetzendes Polyurethan-Acrylat-Copolymer enthält.

14. Folienverbundbanknote (1) nach einem der vorangehenden Ansprüche, **dadurch gekennzeichnet, dass** das Basispapier ein Baumwollpapier mit einem Anteil von 5 bis 6 Gew.-% Kunststofffasern, insbesondere Polyamidfasern oder Polyesterfasern, ist.

15. Verfahren zur Herstellung einer Folienverbundbanknote (1) nach einem der Ansprüche 1 bis 14, **dadurch gekennzeichnet, dass**
- in einer Papiermaschine ein mindestens einlagiges Basispapier (2) hergestellt wird,
- das Basispapier (2) an seinen beiden Hauptflächen jeweils vollflächig mit einer Imprägnierungszusammensetzung imprägniert wird, die mindestens ein Polyurethan enthält, und
- das imprägnierte Basispapier (2) an seinen beiden Hauptflächen jeweils vollflächig mit einer Kunststofffolie (4,5) ausgestattet wird.

## Claims

1. A foil composite banknote (1) having an at least single-layer base paper (2) and two plastic foils (4, 5), which have the same surface dimensions as the base paper (2) and cover the base paper (2) on its two main faces respectively over the entire area, **characterized in that** the base paper (2) is impregnated on both of its main faces respectively over the entire area with a composition which forms a polyurethane impregnation (3).

2. The foil composite banknote (1) according to claim 1, **characterized in that** the base paper (2) has two or more layers (2a, 2b).

3. The foil composite banknote (1) according to claim 1 or 2, **characterized in that** the base paper (2) is unsized paper.

4. The foil composite banknote (1) according to any of the claims 1 to 3, **characterized in that** the base paper (2) is adhesively bonded on at least one of its main surfaces with one of the plastic foils (4, 5) by means of an adhesive layer (6, 7).

5. The foil composite banknote (1) according to any of the claims 1 to 4, **characterized in that** at least one of the plastic foils (4, 5) is equipped on its surface facing away from the base paper (2) at least partially with a print acceptance layer (8, 9).

6. The foil composite banknote (1) according to any of the claims 1 to 5, **characterized in that** the impregnation composition is an aqueous polyurethane dispersion.

7. The foil composite banknote (1) according to any of the claims 1 to 6, **characterized in that** the impregnation composition contains as the polyurethane component a polyurethane homopolymer or a mixture of polyurethane homopolymers.

8. The foil composite banknote (1) according to any of the claims 1 to 7, **characterized in that** the impregnation composition contains as the polyurethane component a polyurethane copolymer or a mixture of polyurethane copolymers, preferably a polyurethane acrylate copolymer.

9. The foil composite banknote (1) according to any of the claims 1 to 8, **characterized in that** the impregnation composition is a crosslinking composition or a physically drying composition.

10. The foil composite banknote (1) according to any of the claims 1 to 9, **characterized in that** the impregnation composition is a self-crosslinking composition.

11. The foil composite banknote (1) according to any of the claims 1 to 9, **characterized in that** the impregnation composition is a composition which crosslinks by means of crosslinking agents.

12. The foil composite banknote (1) according to claim 7 or 11, **characterized in that** the impregnation composition contains as the polyurethane component a mixture of anionic aliphatic polyurethane homopolymers and a multifunctional carbodiimide as the crosslinking agent.

13. The foil composite banknote (1) according to claim 8 or 10, **characterized in that** the impregnation composition contains as the polyurethane component an aliphatic self-crosslinking polyurethane acrylate copolymer.

14. The foil composite banknote (1) according to any of the preceding claims, **characterized in that** the base paper is a cotton paper with a proportion of 5 to 6 wt.-% plastic fibers, in particular polyamide fibers or polyester fibers.

15. A method for manufacturing a foil composite banknote (1) according to any of the claims 1 to 14, **characterized in that**
- in a paper machine an at least single-layer base paper (2) is manufactured,
- the base paper (2) is impregnated on both of its main faces respectively over the entire area with an impregnating composition containing at least one polyurethane, and
- the impregnated base paper (2) is equipped on its two main faces respectively over the entire area with a plastic foil (4, 5).

## Revendications

1. Billet de banque en film composite (1) comprenant un papier de base (2) d'au moins une couche et deux films en matière plastique (4, 5) qui présentent les mêmes dimensions de surface que le papier de base (2) et recouvrent respectivement à pleine surface le papier de base (2) sur ses deux surfaces principales, **caractérisé en ce que** le papier de base (2) est, sur ses deux surfaces principales, imprégné respectivement à pleine surface avec une composition qui constitue une imprégnation polyuréthane (3).

2. Billet de banque en film composite (1) selon la revendication 1, **caractérisé en ce que** le papier de base (2) comporte deux ou plusieurs couches (2a, 2b).

3. Billet de banque en film composite (1) selon la revendication 1 ou 2, **caractérisé en ce que** le papier de base (2) est du papier non encollé.

4. Billet de banque en film composite (1) selon une des revendications de 1 à 3, **caractérisé en ce que** le papier de base (2) est, sur au moins une de ses surfaces principales, collé à un des films en matière plastique (4, 5) au moyen d'une couche de colle (6, 7).

5. Billet de banque en film composite (1) selon une des revendications de 1 à 4, **caractérisé en ce qu'**au moins un des films en matière plastique (4, 5) est, sur sa surface tournée à l'opposé du papier de base (2), muni, au moins sur une partie de la surface, d'une couche de réception d'impression (8, 9).

6. Billet de banque en film composite (1) selon une des revendications de 1 à 5, **caractérisé en ce que** la composition d'imprégnation est une dispersion aqueuse de polyuréthane.

7. Billet de banque en film composite (1) selon une des revendications de 1 à 6, **caractérisé en ce que** la composition d'imprégnation contient en tant que composant polyuréthane un homopolymère de polyuréthane ou un mélange d'homopolymères de polyuréthane.

8. Billet de banque en film composite (1) selon une des revendications de 1 à 7, **caractérisé en ce que** la composition d'imprégnation contient en tant que composant polyuréthane un copolymère de polyuréthane ou un mélange de copolymères de polyuréthane, de préférence un copolymère d'acrylate de polyuréthane.

9. Billet de banque en film composite (1) selon une des revendications de 1 à 8, **caractérisé en ce que** la composition d'imprégnation est une composition à réticulation ou une composition à séchage physique.

10. Billet de banque en film composite (1) selon une des revendications de 1 à 9, **caractérisé en ce que** la composition d'imprégnation est une composition à auto-réticulation.

11. Billet de banque en film composite (1) selon une des revendications de 1 à 9, **caractérisé en ce que** la composition d'imprégnation est une composition qui est réticulée au moyen d'agents de réticulation.

12. Billet de banque en film composite (1) selon la revendication 7 ou 11, **caractérisé en ce que** la composition d'imprégnation contient en tant que composant polyuréthane un mélange d'homopolymères de polyuréthane aliphatiques anioniques et contient un carbodiimide multifonctionnel en tant que réticulant.

13. Billet de banque en film composite (1) selon la revendication 8 ou 10, **caractérisé en ce que** la composition d'imprégnation contient en tant que composant polyuréthane un copolymère d'acrylate de polyuréthane aliphatique à auto-réticulation.

14. Billet de banque en film composite (1) selon une des revendications précédentes, **caractérisé en ce que** le papier de base est un papier de coton ayant une proportion de 5 à 6 pourcent par poids de fibres en matière synthétique, en particulier des fibres de polyamide ou de polyester.

15. Procédé de fabrication d'un billet de banque en film composite (1) selon une des revendications de 1 à 14, **caractérisé en ce que**
- dans une machine à papier, un papier de base (2) d'au moins une couche est fabriqué,
- le papier de base (2) est, sur ses deux surfaces principales, imprégné respectivement à pleine surface avec une composition d'imprégnation qui contient au moins un polyuréthane, et
- le papier de base (2) imprégné est respectivement muni à pleine surface, sur ses deux surfaces principales, d'une couche en matière plastique (4, 5).
